(19) Europäisches Patentamt
European Patent Office
Office européen des brevets

(11) **EP 4 202 860 A1**

(12) **EUROPEAN PATENT APPLICATION**

(43) Date of publication:
28.06.2023 Bulletin 2023/26

(21) Application number: 21216898.3

(22) Date of filing: 22.12.2021

(51) International Patent Classification (IPC):
$G06V\ 20/56^{(2022.01)}$    $G06V\ 10/25^{(2022.01)}$
$G06V\ 10/44^{(2022.01)}$    $G06V\ 20/64^{(2022.01)}$
$G06T\ 7/66^{(2017.01)}$    $G06V\ 10/42^{(2022.01)}$

(52) Cooperative Patent Classification (CPC):
G06V 20/56; G06T 7/66; G06V 10/25;
G06V 10/421; G06V 10/44; G06V 20/64

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Aptiv Technologies Limited
St. Michael (BB)

(72) Inventors:
• Bogacki, Piotr
30-069 Krakow (PL)
• Dlugosz, Rafal
62-030 Lubon (PL)
• Banach, Marzena
62-040 Puszczykowo (PL)

(74) Representative: Hoffmann Eitle
Patent- und Rechtsanwälte PartmbB
Arabellastraße 30
81925 München (DE)

(54) **DETERMINING POSITION OF THE CENTRAL POINT OF POINT CLOUD DATA**

(57) The present disclosure relates to a computer-implemented method for determining a central point of point cloud data in an automotive system for monitoring the environment of a vehicle. The point cloud data is generated by one or more sensors of the vehicle with respect to a reference coordinate system. The point cloud data defines a connected subspace of the reference coordinate system. The method comprises a step a) of determining a bounding box of the point cloud data, a step b) of selecting a starting agent position of an agent within the bounding box, and a step c) of selecting a coordinate system relative to the bounding box. In a further step d) a plurality of agent moving operations are performed. Each agent moving operation comprises moving the agent from the current agent position to a new agent position parallel to a coordinate axis of the selected coordinate system. The new agent position is determined based on an intersecting line through the current agent position parallel to the coordinate axis. The method further comprises a step e) of determining, after step d) is completed, the new agent position as the central point of the point cloud data.

Fig. 3

EP 4 202 860 A1

**Description**

[Technical Field]

The present invention relates to a method and apparatus for determining a central point of point cloud data in an automotive system for monitoring the environment of a vehicle.

[Background]

In the field of imaging systems and computer vision techniques, a need exists for a method that enables computing, in a simple way, the position of a central point of point cloud data located in an n-dimensional space. The term "point cloud data" (also called object) is here understood as a collection of points that are sufficiently close to other points from a given collection, so that the object collection can be distinguished from other similar objects in the data space.

In the literature one can find various methods that allow for computing the position of the central point of an object. In most of the reported cases these methods are used to find the central point of light spots in a 2-dimensional data space. The central point can be defined in various ways, depending on the application requirements. In majority of cases, the used algorithms compute the, so called, center of gravity of point cloud data.

Reference [1] describes a method for locating the centroid of planar objects, that is, their center of gravity, of different shapes using computer vision techniques to scan through images depicting different objects and locate their centroids. In such an approach, the overall area of the object is taken into account, while computing the position of its central point. As a result, if for example two or more smaller objects are joined together with a "bridge", the center of gravity is located somewhere in-between these smaller objects. In a similar way, if an undesired object ("stuck-on" part) is glued with an object of interest, the center of gravity is shifted from the position, in which it would be in case of the lack of the undesired segment of the object.

Reference [2] describes an algorithm that may be useful for placing labels and tooltips on polygons by finding a polygon pole of inaccessibility, which is the most distant internal point from the polygon outline. However, this method is known to be computationally complex and as such is not recommended for real time applications. In this case even several hundred temporary points are selected, covering the spot that is processed. For each point, distances to particular segments of the boundary are computed that requires using a large number of trigonometric operations.

Reference [3] describes an algorithm for computing a feature used to describe, in a simple way, a shape of an object. The position of the central point of this object has to be determined before starting the procedure described in Reference [3]. This feature is then used in the classification process of the objects, performed with the use of artificial neural networks. In such applications, the required precision of the computation of the position of the central point of the spot does not need to be very high.

Patent Literature [4] describes a method for identifying candidate points as possible characteristic points of a calibration pattern within an image of the calibration pattern.

[References]

[1]:    Gahramanova, Amina (2019) "Locating Centers of Mass with Image Processing", Undergraduate Journal of Mathematical Modeling: One + Two: Vol. 10: Iss. 1, Article 1, DOI: https://doi.org/10.5038/2326-3652.10.1.4906

[2]:    Vladimir Agafonkin (2016) "A new algorithm for finding a visual center of a polygon" [Blog post], retrieved from: https://blog.mapbox.com/a-new-algorithm-for-finding-a-visual-center-of-a-polygon-7c77e6492fbc

[3]:    EP 3 872 693 A1

[4]:    US 10,776,953 B2

[Summary of the invention]

In the novel approach proposed in the present disclosure, a central point of point cloud data is determined. The term "point cloud data" (also called object) is here understood as a point cloud data, that is, a collection of points that are sufficiently close to other points from the collection, so that the point cloud data can be distinguished from any other point cloud data in the data space.

In the proposed method, the central point is, to some extent, understood as in Reference [2]. However, in contrary to Reference [2], it is assumed that the boundaries of the point cloud data may be irregular, which is important from the point of view of target applications in automotive systems. Thus, it is an aim of the proposed method to find a central point of point cloud data, while ignoring the undesired point cloud data glued to it. In other words, the proposed method is designed to be robust against situations in which a larger point cloud data, which is the subject of analysis, is connected to surrounding smaller undesired point cloud data that should be ignored.

It is yet another aim of the proposed method to provide an algorithm with substantially reduced computational complexity compared to the state of the art. This is particularly important for real-time applications in a vehicle.

To achieve or at least partially achieve the above-mentioned aims, apparatuses and methods according to the invention are defined in the independent claims. Particular embodiments are defined in the dependent claims, and are explained in the present description.

One aspect relates to a computer-implemented method for determining a central point of point cloud data in an automotive system for monitoring the environment of a vehicle. The point cloud data is generated by one or more sensors of the vehicle with respect to a reference coordinate system. The point cloud data defines a connected subspace of the reference coordinate system. The method comprises a step a) of determining a bounding box of the point cloud data, a step b) of selecting a starting agent position of an agent within the bounding box, and a step c) of selecting a coordinate system relative to the bounding box. In a further step d) a plurality of agent moving operations are performed. Each agent moving operation comprises moving the agent from the current agent position to a new agent position parallel to a coordinate axis of the selected coordinate system. The new agent position is determined based on an intersecting line through the current agent position parallel to the coordinate axis. The method further comprises a step e) of determining, after step d) is completed, the new agent position as the central point of the point cloud data.

In another aspect, the starting agent position is selected at a random position within the bounding box or at a predetermined position within the bounding box.

In another aspect, the reference coordinate system and the coordinate system relative to the bounding box are orthogonal.

In another aspect, the reference coordinate system and the coordinate system relative to the bounding box are 2-dimensional, and step c) comprises selecting a rotation angle defining the rotation of the reference coordinate system with respect to the coordinate system.

In another aspect, the new agent position is determined based on edge points given by the intersections of an intersecting line through the current agent position parallel to the coordinate axis with the boundary of the subspace defined by the point cloud data.

In another aspect, the new agent position is determined based on a first and a second edge point of the edge points, wherein the first and second edge points are determined as the edge points of a connected line segment of a plurality of connected line segments closest to the current agent position, or the first and second edge points are determined as the edge points of the largest connected line segment of a plurality of connected line segments, wherein each connected line segment of the plurality of connected line segments is defined as a range where the intersecting line intersects the connected subspace.

In another aspect, the new agent position is determined as the center point of the first and second edge point.

In another aspect, the new agent position is determined based on adding the difference between a first number and a second number, divided by a positive real-valued constant, to the current agent position with respect to the coordinate axis, wherein the first number is a number of data points of the point cloud data in a first direction along the intersecting line and the second number is a number of data points of the point cloud data in a second direction along the intersecting line.

In another aspect, the selected coordinate system is N-dimensional with coordinate axes $x1,...,xN$, and step d) comprises moving the agent, for $i=1,...,N$, from the current agent position to the new agent position in the positive or negative direction of the coordinate axis $xi$.

In another aspect, the number of agent moving operations is predetermined, or step d) is completed if the distance between the current agent position and the new agent position is smaller than a threshold distance.

In another aspect, the method further comprises the step of repeating steps (a) to (e) for point cloud data representing a target at different points in time thereby determining a plurality of central points, the plurality of central points providing information indicative of a time-evolution of the target.

In another aspect, the one or more sensors of the vehicle comprise cameras, photosensors, infrared sensors, lidar sensors, radar sensors and/or ultrasonic sensors.

In another aspect, the method further comprises the step of executing, after step e), a predetermined operation of the vehicle based on the determined central point of the point cloud data, wherein the predetermined operation comprises adaptive headlight control, traffic sign recognition, automatic emergency breaking and/or object tracking.

In another aspect, the present disclosure relates to a data processing apparatus comprising means for carrying out the steps of the method of any one of the previous aspects.

In another aspect, the present disclosure relates to a vehicle comprising the data processing apparatus.

[Brief description of the drawings]

Fig. 1a is an example of an image of photosensor data showing two bright spots representing the glowing headlights of a car.

Fig. 1b shows two separate images, each representing the point cloud data associated with one of the headlights in fig. 1a.

Fig. 1c shows an example of the point cloud data of Fig. 1b within a bounding box.

Fig. 2 is a flow chart of the method for determining a central point of point cloud data in an illustrative embodiment.

Fig. 3 shows an example for a plurality of agent moving operations for a 2-dimensional point cloud data.

Figs. 4a to 4d illustrates point cloud data of different shapes.

Fig. 5 is a schematic illustration of a hardware structure of a data processing apparatus.

[Detailed description]

The present invention shall now be described in conjunction with specific embodiments. The specific embodiments serve to provide the skilled person with a better understanding, but are not intended to in any way restrict the scope of the invention, which is defined by appended claims. In particular, the embodiments described independently throughout the description can be combined to form further embodiments to the extent that they are not mutually exclusive.
A point cloud data of a target may be based on data generated using one or more sensors, such as digital imaging sensors with rows and columns of pixels. For example, imaging sensor may comprise photosensors, radar sensor, lidar sensors and the like. The one or more sensor generating the point cloud data may be part of a vehicle and may for example provide information related to the surrounding environment of the vehicle. Similarly, the one or more sensor may provide information related to the interior of the vehicle. The target refers to a target in the real world whose center point is to be determined in order to track/monitor the target. The target may for example be the headlights of a car.
The point cloud data may represent information about the target and may for example be used in a subsequent data analysis method, such as target recognition methods or target tracking methods. Target recognition methods may be used to determine the class or type of a target represented by the point cloud data. Target tracking methods may be used to track the time-evolution of a target represented by the point cloud data comprising two or more point clouds representing the target at different times, thereby providing information related to the target's trajectory, direction of motion, velocity, acceleration and/or the like.
The point cloud data is given with respect to a reference coordinate system. The reference coordinate system may be a spatial coordinate system, wherein each axis represents a spatial direction. The reference coordinate system may for example be 2-dimensional, 3-dimensional or higher dimensional. The reference coordinate system may be orthogonal.
An example for a 2-dimensional point cloud data of a target, that is, a point cloud data represented by a 2-dimensional reference coordinate system, is a point cloud data generated by a photosensor. The photosensors may for example provide, after pre-processing such as thresholding or binarization, a black-and-white image of a scene at a given time, wherein data points, such as white pixels, correspond to a light source or a reflection of a light source and no data points, such as black pixels, corresponds to the absence of light. For example, the reference coordinate system is defined with its axes aligned along the edges of the image, i.e. the x-axis is aligned along the horizontal edge of the image, while the y-axis is aligned along the vertical edge.
An example of a 3-dimension point cloud data, that is, a point cloud data represented by a 3-dimensional reference coordinate system, is a point cloud data generated by a lidar system, such as a scanning lidar system or flash lidar system. The target may for example be illuminated by one or more pulses of laser light generated by the lidar system and the laser light reflected by the target is received by a laser light sensor of the lidar system, wherein the laser light sensor provides spatial and timing information. The timing information may be used to determine the range between the lidar system and the target, thereby providing 3-dimensional point cloud data.
The reference coordinate system could also be 4-dimensional by adding a time axis to 3-dimensional data. Furthermore, an even higher dimensional reference coordinate system could be used by merging data from multiple sensors.

The point cloud data may preferably be digitized, meaning that the data points in the reference coordinate system take discrete values. For example, the reference coordinate system may be adapted to the structure of the one or more digital imaging sensors, each having rows and columns of pixels. In this case, each cell of the discrete reference coordinate system may correspond to a pixel or a read-out time interval of the one or more sensors.

The point cloud data of the target may be based on data generated by the one or more sensors which has been preprocessed according to the requirements of a subsequent data analysis method. For example, the point cloud data may be based on sensor data which has been filtered, scaled, binarized with respect to a predetermined threshold value, and/or has otherwise been transformed.

The one or more sensors may provide information (sensor data) related to a plurality of targets and/or to a plurality of features of a single target. In this case, the information may yield a plurality of point cloud data, wherein each of the plurality of point cloud data represents a target of the plurality of targets and/or a feature of the plurality of features of a single target.

The point cloud data defines a connected subspace of the reference coordinate system. The connected subspace is constituted by the plurality of data points of the point cloud data, wherein each data point in the plurality of data points is located adjacent to another data point of the plurality of data points. In other words, a data point is said to be adjacent if it is sufficiently close, i.e. within a certain range, to another data point of the same plurality of data points, so that the plurality of data points can be distinguished from another plurality of data points. For example, in a discrete reference coordinate system, for each data point of the plurality of data points there is another data point in an adjacent cell.

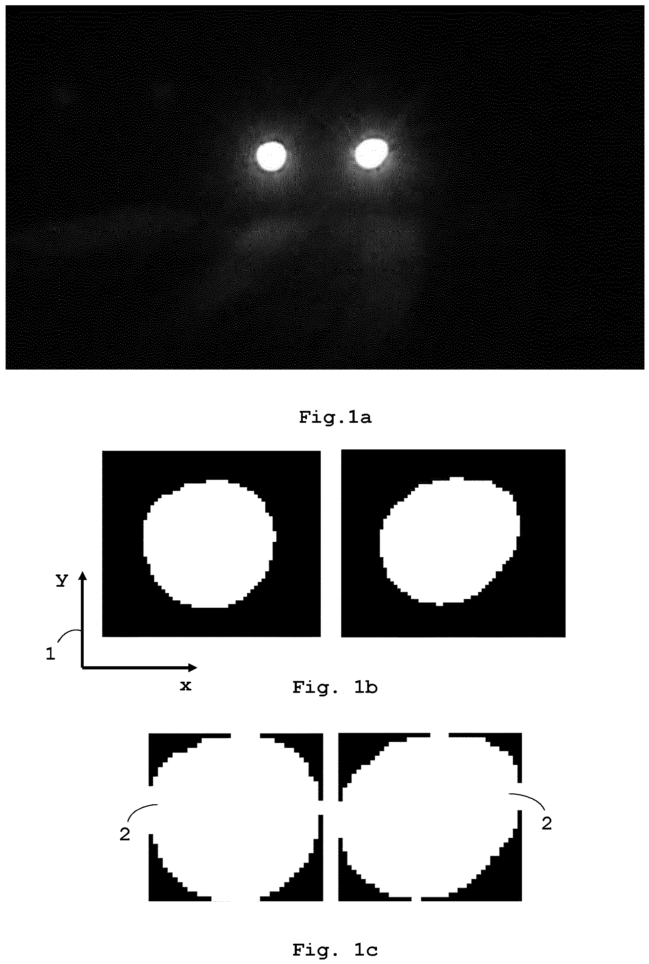

Fig. 1a is an example of an image of photosensor data showing two bright spots representing the glowing headlights of a car in a dark environment. In this case, the reference coordinate system 1 is 2-dimensional.

Fig. 1b shows two separate images, each representing point cloud data 2 associated with (corresponding to) one of the headlights. In this example, the point cloud data 2 corresponds to a binarized version of the two bright spots shown in Fig. 1a. The binarization of the photosensor data may be performed using a predetermined threshold, such that a data point of the photosensor data with a value larger than the predetermined threshold is assigned to the point cloud data 2, while a value lower or equal to the predetermined threshold is not.

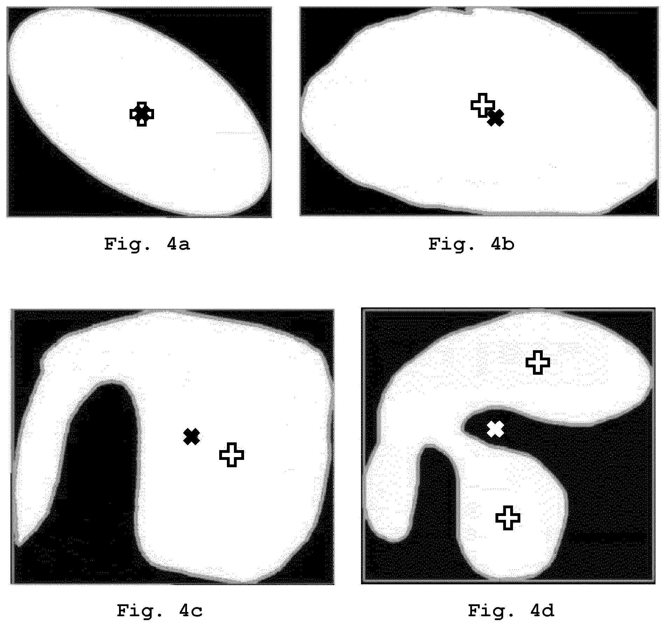

In case of point cloud data (target) that has a regular shape, the center of gravity provides a good estimation of the position of the central point of the point cloud data. Several examples of such targets are shown in Fig. 1a. However, the computation complexity is in this case large, and additionally depends on the sizes (the number of pixels / points) inside the processed object. In case of objects that feature an irregular shape (see examples in Fig. 4c and 4d), the center of gravity may be located far from the desired central point. Such a situation may happen for example in the AHC (adaptive headlight control) algorithm that aims at distinguishing the vehicle lights from other light sources. In numerous observed cases, the car lights are "glued", in the image taken by the camera, with other light spots, e.g. the lights of other vehicles, street lamps, etc. In this situation, due to unpredictable shapes of undesired objects glued with a target of interest, an erroneous description of the shape of this object may happen, which can lead to wrong classification of a given light.

In view thereof, it is an object of the proposed method to provide a fast and efficient method for determining a central point for each of the two bright spots in Fig. 1b. For example, by determining the central points it may be possible to quickly gauge the range from the photosensor to the car since, in general, the distance between the headlights of a car is very similar across different cars.

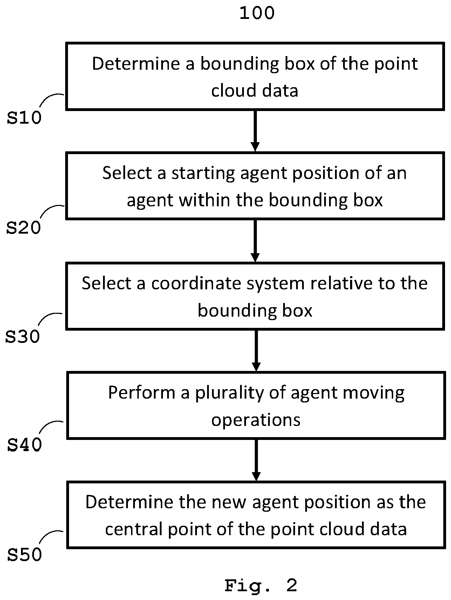

Fig. 2 is a flow chart of the method 100 for determining a central point of point cloud data in an illustrative embodiment. The method 100 will be described with respect to a point cloud data given by binarized photosensor data, although the method 100 may apply to other types of sensor data. The method 100 may include other steps, not shown, and the steps may be performed in a different order (especially, the order of steps S20 and S30 is arbitrary).

In a first step S10, a bounding box of the point cloud data 2 is determined, wherein each side of the bounding box is a tangent to the point cloud data 2. The bounding box may preferably have a rectangular shape since this simplifies the computations. Fig. 1c shows an example for each corresponding point cloud data 2 of Fig. 1b within a bounding box. For example, a standard image cropping algorithm may be used to determine the bounding box, wherein the image cropping algorithm removes unwanted peripheral areas of the images of Fig. 1b without data points while retaining a rectangular shape.

For convenience, the space within the bounding box may be parameterized using normalized coordinate values, that is, the reference coordinate system is adapted such that the reference coordinate system 1 is spanned by the edges of the bounding box intersecting at the origin of the reference coordinate system. In this case, points within the bounding box along each axis may have normalized coordinate values between 0 and 1 with respect to the given axis.

In a second step S20, a starting agent position of an agent within the bounding box is selected. The agent serves as a point of reference for the following agent moving operations and its position is changed in each of the agent moving operations. Hence, the agent corresponds to one point in the reference coordinate system (or the coordinate system selected in the following step S30) within the bounding box. The starting agent position may be selected at a random position within the bounding box or at a predetermined position within the bounding box. For example, a predetermined position for agent starting position may be given by the center of the bounding box.

In a third step S30, a coordinate system relative to the bounding box is selected. The selected coordinate system relative to the bounding box determines the allowable directions of movement of the agent in the agent moving operations. The selected coordinate system may be orthogonal. The selected coordinate system has the same dimension as the reference coordinate system. The selected coordinate system may further be rotated against the reference coordinate system, that is, the third step may comprise selecting one or more rotation angles defining the rotation of the reference coordinate system with respect to the selected coordinate system. Furthermore, the origin of the reference coordinate system and the origin of the selected coordinate system may be identical.

In a fourth step S40, a plurality of agent moving operations are performed, wherein for each moving operation the agent is moved from the current agent position to a new agent position parallel to a coordinate axis of the selected coordinate system. In other words, the current agent position is given by the new agent position determined in the previous agent moving operation or, in case of the first agent move operation, by the starting agent position. The coordinate axis parallel to which the agent is moved may be changed after every agent moving operation of the plurality of agent moving operations. Preferably, the agent moves along all coordinate axes of the selected coordinate system in step S40.

The new agent position may be determined based on edge points given by the intersections of an intersecting line through the current agent position parallel to the coordinate axis with the boundary of the subspace defined by the point cloud data 2. The boundary of the point cloud data is not known in advance, but only determined along the intersecting line, such that the point cloud data does not need to be analyzed in advance to determine and store its boundary. This further reduces computational complexity.

The new agent position may be determined based on a first and a second edge point of the edge points and the new agent position may be determined as the center point of the first and second edge point. In other words, the new agent position is given by the midpoint of the line connecting first and second edge points, wherein the midpoint is determined by dividing the distance between the first and second edge point by a factor of two. In a computer implementation of the agent moving operation, a division by two may be performed by a bit shift operation that shifts a binary number one place to the right, wherein the lowest order bit is removed. For a computer, such an operation is therefore inexpensive, which contributes to the overall efficiency of the method 100.

The first and second edge points may be determined as the edge points of the largest connected line segment of a plurality of connected line segments, wherein each connected line segment of the plurality of connected line segments may be defined as a range where the intersecting line intersects the connected subspace. In this approach the sum of data points for each of the plurality of connected line segments may be calculated.

Alternatively, the first and second edge points may be determined as the edge points of a connected line segment of a plurality of connected line segments closest to the current agent position, wherein each connected segment of the plurality of connected line segments is defined as a range where the intersecting line intersects the connected subspace.

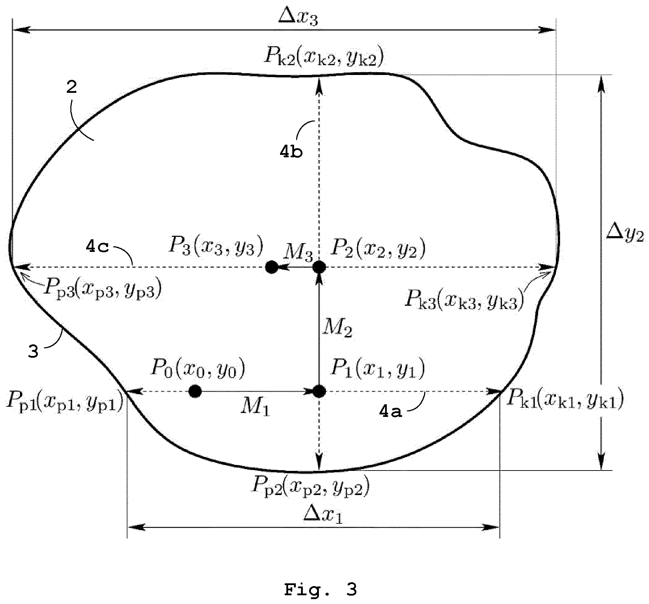

Fig. 3 shows an example for a plurality of agent moving operations ($M_1$, $M_2$, $M_3$) for a 2-dimensional point cloud data 2 defining a connected subspace with an irregular boundary 3. The starting agent position is indicated with $P_0(x_0, y_0)$, wherein $x_0$ and $y_0$ are the coordinates of the starting agent position with respect to the selected coordinate system relative to the bounding box.

For the first agent moving operation $M_1$, a direction parallel to the x-axis of the selected coordinate system is chosen. The current agent position is $P_0(x_0, y_0)$. The first intersecting line 4a through $P_0(x_0, y_0)$ parallel to the x-axis intersects the boundary 3 at a first and second edge point, $P_{p1}(x_{p1}, y_{p1})$ and $P_{k1}(x_{k1}, y_{k1})$, respectively. The coordinates $x_1$ and $y_1$ of the new agent position $P_1(x_1, y_1)$ are then determined as the center point of the first and second edge point, such that

$$x_1 = x_{p1} + (x_{k1} - x_{p1}) / 2 = x_{p1} + \Delta x_1 / 2,$$

$$y_1 = y_0.$$

This way the agent is moved from the current agent position $P_0(x_0, y_0)$ in the positive direction of the x-axis to the new agent position $P_1(x_1, y_1)$.

For the second agent moving operation ($M_2$) a direction parallel to the y-axis of the coordinate system relative to the bounding box is chosen. The current agent position is $P_1(x_1, y_1)$, i.e. the new agent position determined by the previous agent moving operation $M_1$. The second intersecting line 4b through $P_1(x_1, y_1)$ parallel to the y-axis intersects the boundary 3 at a first and second edge point, $P_{p2}(x_{p2}, y_{p2})$ and $P_{k2}(x_{k2}, y_{k2})$, respectively. The coordinates $x_2$ and $y_2$ of the new agent position $P_2(x_2, y_2)$ are then determined as the center point of the first and second edge point, such that

$$x_2 = x_1,$$

$$y_2 = y_{p2} + (y_{k2} - y_{p2}) / 2 = y_{p2} + \Delta y_2 / 2$$

This way the agent is moved from the current agent position $P_1(x_1, y_1)$ in the positive direction of the y-axis to the new agent position $P_2(x_2, y_2)$.

For the third agent moving operation $M_3$ a direction parallel to the x-axis of the coordinate system relative to the bounding box is chosen. The current agent position is $P_2(x_2, y_2)$, i.e. the new agent position determined by the previous agent moving operation $M_2$. The third intersecting line 4c through $P_2(x_2, y_2)$ parallel to the x-axis intersects the boundary 3 at a first and second edge point, $P_{p3}(x_{p3}, y_{p3})$ and $P_{k3}(x_{k3}, y_{k3})$, respectively. The coordinates $x_3$ and $y_3$ of the new agent position $P_3(x_3, y_3)$ are then determined as the center point of the first and second edge point, such that

$$x_3 = x_{p3} + (x_{k3} - x_{p3}) / 2 = x_{p3} + \Delta x_3 / 2,$$

$$y_3 = y_2.$$

This way the agent is moved from the current agent position $P_2(x_2, y_2)$ in the negative direction of the x-axis to the new agent position $P_3(x_3, y_3)$.

In the example shown in Fig. 3, the agent is allowed to move only within the point could data, i.e. once the agent enters the point could data, it cannot leave it. In this approach, the algorithm is robust against the undesired objects.

As an alternative to determining the new agent position based on edge points, the new agent position may be based on a first number $N_1$ of data point of the point cloud data in a first direction along the intersecting line and a second number $N_2$ of data point of the point cloud data in a second direction along the intersecting line. The first and second direction may be the positive and negative direction, respectively. In other words, the current agent position partitions the intersection line in two parts. $N_1$ counts the number of data points of the point cloud data laying in one part of the intersection line and $N_2$ counts the number of data points of the point cloud data laying in the other part of the intersection line.

The new agent position may then be determined by adding the difference between $N_1$ and $N_2$, divided by a positive real-valued constant K, i.e. the distance $S_{dist}$ given by

$$S_{dist} = (N_1 - N_2) / K,$$

to the current agent position with respect to the selected coordinate axis, such that the agent is moved in the first direction, if $N_1 > N_2$, the agent is moved in the second direction, if $N_1 < N_2$, and the agent is not moved if $N_1 = N_2$. The constant K may be set to a value larger than 1. The constant K may be set to a value less than 3. The constant K may preferably be set to 2.

In the above example, the new agent position $P_i(x_i, y_i)$ for a moving operation a direction parallel to the x-axis of the coordinate system relative to the bounding box may be given by

$$x_i = x_{i-1} + (N_1 - N_2) / 2 = x_{i-1} + S_{dist},$$

$$y_i = y_{i-1},$$

wherein $P_{i-1}(x_{i-1}, y_{i-1})$ is the current agent position, $N_1$ and $N_2$ are the number of pixels in the positive and negative x-direction, respectively, and the constant K is set to 2.

In the above example, the new agent position $P_i(x_i, y_i)$ for a moving operation a direction parallel to the y-axis of the coordinate system relative to the bounding box may be given by

$$x_i = x_{i-1},$$

$$y_i = y_{i-1} + (N_1 - N_2) / 2,$$

wherein $P_{i-1}(x_{i-1}, y_{i-1})$ is the current agent position, $N_1$ and $N_2$ are the number of pixels in the positive and negative y-direction, respectively, and the constant K is set to 2.

According to this alternative, the agent is allowed to temporarily leave the point cloud data. This approach may be used as a less computationally complex substitution of computing the center of gravity.

The fourth step S40 may be terminated in several ways. The number of agent moving operations may be predetermined, such as limited to three agent moving operation as in the above example described with respect to Fig. 3. Alternatively, the fourth step S40 may be determined to be completed if the distance between the current agent position and the new agent position is smaller than a threshold distance D, i.e.

$$|P_i - P_{i-1}| < D.$$

An advantage of the proposed agent moving operations is that computing consecutive agent positions requires only simple arithmetic operations, such as addition, subtraction, increment and shifting bits (when dividing by 2 or a power of two).

It should be noted that it is possible to use any combination of the above approaches for the agent moving operations in step S40 of performing a plurality of agent moving operations. In other words and with reference to the approaches described above, a first subset of the plurality of agent moving operations may be based on the first and second edge points being determined as the edge points of a connected line segment of a plurality of connected line segments closest to the current agent position, a second subset of the plurality of agent moving operations may be based on the first and second edge points being determined as the edge points of the largest connected line segment of a plurality of connected line segments, and a third subset of the plurality of agent moving operations are based on difference between the first number and the second number, divided by a positive real-valued constant. The first agent moving operation performed in step S40 may be the agent moving operation based on the first number and the second number, divided by a positive real-valued constant.

In a fifth step S50, the new agent position, determined by the last agent moving operation of the previous fourth step S40, is determined as the central point of the point cloud data 2.

The central point of a point cloud data determined by this method 100 differs from the centroid, or center of gravity, of the point cloud data. Figs. 4a to 4d illustrates point cloud data of different shapes, for which the central point is computed using two methods. The first method follows the conventional approach and is based on determining the center of gravity of the point cloud. The center of gravity is marked with a solid cross ( ). The second method is the proposed method 100 yielding a central point marked with a hollow plus symbol ( ). Depending on the shape of the point cloud data, the computed positions of the central point can substantially differ between these two approaches.

In Fig. 4a and 4b point cloud data of regular shapes are shown, whose shape, to some extent, corresponds to car lights shown in Figs. 1a to 1c. Here, the difference between the central point determined by the two approaches is relatively small.

Fig. 4c shows a point cloud with an irregular shape, i.e. there is an undesired elongated segment on the left side which is connected with the main spot on the right side. As a result, the difference between the position of the center of gravity and the point determined with the use of the proposed method 100 is relatively large. As shown in Fig. 4c, the proposed method 100 is able to find the position of the central point of the main part of the spot, without taking into account the visible undesired segments.

In Fig. 4d the point cloud data takes the shape of three spots which are connected with a bridge. When the center of gravity is computed, it is found to be outside the point cloud data. In case of the proposed method 100, the position of the central point may depend on the details of the particular embodiment of the proposed method. For example, the position of the central point may depend on the starting agent position, which may be chosen at random, the orientation of the coordinate system relative to the bounding box, the number of agent moving operations or the way the first and second edge points are selected. Two results for the central point according to embodiments of the proposed method are shown in Fig. 4d. The two central points are located in the center of the two largest segments of the point cloud data.

It should be understood that the method 100 is not restricted to a 2-dimenional point cloud data. For example, the point cloud data may be 3-dimensional, such as, for example, a point cloud data generated by lidar sensors. In this case, the selected coordinate system is 3-dimensional with axes x, y and z and an agent moving operation parallel to any one of the axes would be performed similar to the above. For example, for the i-th agent moving operation parallel to the z-axis, the coordinates $x_i$, $y_i$ and $z_i$ of the new agent position $P_i(x_i, y_i, z_i)$ is then determined as the center point of the first and second edge point, $P_{pi}(x_{pi}, y_{pi}, z_{pi})$ and $P_{ki}(x_{ki}, y_{ki}, z_{ki})$, respectively, such that

$$x_i = x_{i-1},$$

$$y_i = y_{i-1},$$

$$z_i = z_{pi} + (z_{ki} - z_{pi}) / 2.$$

This way the agent is moved from a current agent position $P_{i-1}(x_{i-1}, y_{i-1}, z_{i-1})$ in the positive or negative direction of the z-axis to the new agent position $P_i(x_i, y_i, z_i)$.

Similarly, the point cloud data may be N-dimensional. In this case, the selected coordinate system is N-dimensional with coordinate axes $x_1,...,x_N$ and the fourth step S40 comprises moving the agent, for i=1,...,N, from the current agent position to the new agent position in the positive or negative direction of the coordinate axis $x_i$.

As an alternative to determining the new agent position based as the center point of the first and second edge point, a different approach may be used. For example, distance between the first and second edge point may be divided by a positive value other than 2. If the point cloud data comprises non-binary data, such as grayscale image data or color image data, the center point may be determined using a weighted mean, wherein the weights are given by the grayscale or color values of the data points on the line connecting the first and second edge point.

Furthermore, the method 100 may comprise the additional step of repeating steps S10 to S50 for point cloud data representing a target at different points in time thereby determining a plurality of central points, the plurality of central points providing information indicative of a time-evolution of the target.

Furthermore, the method 100 may comprise the additional step of executing, after step S50, a predetermined operation of the vehicle based on the determined central point(s) of the point cloud data, wherein the predetermined operation comprises adaptive headlight control, traffic sign recognition, automatic emergency breaking and/or object tracking.

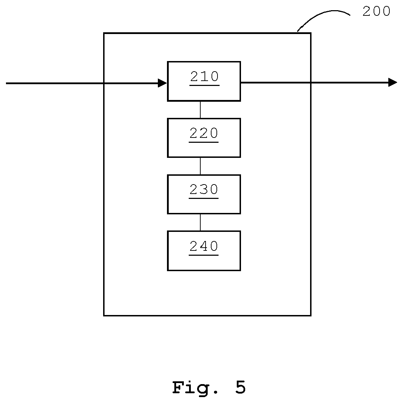

Fig. 5 is a schematic illustration of a hardware structure of a data processing apparatus comprising means for carrying out the steps of the methods of any of the embodiments disclosed above.

The data processing apparatus 200 has an interface module 210 providing means for transmitting and receiving information. The data processing apparatus 200 has also a processor 220 (e.g. a CPU) for controlling the data processing apparatus 200 and for, for instance, process executing the steps of the methods of any of the embodiments disclosed above. It also has a working memory 230 (e.g. a random-access memory) and an instruction storage 240 storing a computer program having computer-readable instructions which, when executed by the processor 220, cause the processor 220 to perform the methods of any of the embodiments disclosed above.

The instruction storage 240 may include a ROM (e.g. in the form of an electrically erasable programmable read-only memory (EEPROM) or flash memory) which is pre-loaded with the computer-readable instructions. Alternatively, the instruction storage 240 may include a RAM or similar type of memory, and the computer-readable instructions can be input thereto from a computer program product, such as a computer-readable storage medium such as a CD-ROM, etc.

In the foregoing description, aspects are described with reference to several embodiments. Accordingly, the specification should be regarded as illustrative, rather than restrictive. Similarly, the figures illustrated in the drawings, which highlight the functionality and advantages of the embodiments, are presented for example purposes only. The architecture of the embodiments is sufficiently flexible and configurable, such that it may be utilized in ways other than those shown in the accompanying figures.

Software embodiments presented herein may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the embodiments described herein. Such software may include without limitation device drivers, operating systems, and user applications. Ultimately, such computer-readable media or storage device(s) further include software for performing example aspects, as described above.

Included in the programming and/or software of the system are software modules for implementing the procedures described herein. In some example embodiments herein, a module includes software, although in other example embodiments herein, a module includes hardware, or a combination of hardware and software.

While various embodiments of the present disclosure have been described above, it should be understood that they have been presented by way of example, and not limitation. It will be apparent to persons skilled in the relevant art(s) that various changes in form and detail can be made therein. Thus, the above described example embodiments are not limiting.

## Claims

1. A computer-implemented method for determining a central point of point cloud data in an automotive system for monitoring the environment of a vehicle, the point cloud data being generated by one or more sensors of the vehicle with respect to a reference coordinate system, the point cloud data defining a connected subspace of the reference coordinate system, the method comprising the steps:

   a) determining (S10) a bounding box of the point cloud data;
   b) selecting (S20) a starting agent position of an agent within the bounding box;
   c) selecting (S30) a coordinate system relative to the bounding box;
   d) performing (S40) a plurality of agent moving operations, wherein each agent moving operation comprises moving the agent from the current agent position to a new agent position parallel to a coordinate axis of the selected coordinate system, wherein the new agent position is determined based on an intersecting line through the current agent position parallel to the coordinate axis;
   e) determining (S50), after step d) is completed, the new agent position as the central point of the point cloud data.

2. The method according to claim 1, wherein the starting agent position is selected at a random position within the bounding box or at a predetermined position within the bounding box.

3. The method according to any one of the previous claims, wherein
   the reference coordinate system and the coordinate system relative to the bounding box are orthogonal.

4. The method according to claim 3, wherein

   the reference coordinate system and the coordinate system relative to the bounding box are 2-dimensional, and
   step c) comprises selecting a rotation angle defining the rotation of the reference coordinate system with respect to the coordinate system.

5. The method according to any one of the previous claims, wherein,

the new agent position is determined based on edge points given by the intersections of an intersecting line through the current agent position parallel to the coordinate axis with the boundary of the subspace defined by the point cloud data.

6. The method according to claim 5, wherein

the new agent position is determined based on a first and a second edge point of the edge points, and the first and second edge points are determined as the edge points of a connected line segment of a plurality of connected line segments closest to the current agent position, or the first and second edge points are determined as the edge points of the largest connected line segment of a plurality of connected line segments, wherein each connected line segment of the plurality of connected line segments is defined as a range where the intersecting line intersects the connected subspace.

7. The method according to claim 5 or 6, wherein
the new agent position is determined as the center point of the first and second edge point.

8. The method according to any one of claims 1 to 4, wherein
the new agent position is determined based on adding the difference between a first number and a second number, divided by a positive real-valued constant, to the current agent position with respect to the coordinate axis, wherein the first number is a number of data points of the point cloud data in a first direction along the intersecting line and the second number is a number of data points of the point cloud data in a second direction along the intersecting line.

9. The method according to any one of the previous claims, wherein

the selected coordinate system is N-dimensional with coordinate axes $x_1,...,x_N$, and step d) comprises moving the agent, for i=1,...,N, from the current agent position to the new agent position in the positive or negative direction of the coordinate axis $x_i$.

10. The method according to any one of the previous claims, wherein

the number of agent moving operations is predetermined, or step d) is completed if the distance between the current agent position and the new agent position is smaller than a threshold distance.

11. The method according to any one of the previous claims, further comprising the step of repeating steps (a) to (e) for point cloud data representing a target at different points in time thereby determining a plurality of central points, the plurality of central points providing information indicative of a time-evolution of the target.

12. The method according to claim 11, wherein
the one or more sensors of the vehicle comprise cameras, photosensors, infrared sensors, lidar sensors, radar sensors and/or ultrasonic sensors.

13. The method according to any one of the previous claims, further comprising the step of

executing, after step e), a predetermined operation of the vehicle based on the determined central point of the point cloud data, wherein the predetermined operation comprises adaptive headlight control, traffic sign recognition, automatic emergency breaking and/or object tracking.

14. A data processing apparatus comprising means for carrying out the steps of the method of any one of the previous claims.

15. A vehicle comprising the data processing apparatus according to claim 14.

Fig.1a

Fig. 1b

Fig. 1c

100

Determine a bounding box of the point cloud data

S10

Select a starting agent position of an agent within the bounding box

S20

Select a coordinate system relative to the bounding box

S30

Perform a plurality of agent moving operations

S40

Determine the new agent position as the central point of the point cloud data

S50

Fig. 2

Fig. 3

Fig. 4a

Fig. 4b

Fig. 4c

Fig. 4d

Fig. 5

Europäisches
Patentamt

European
Patent Office

Office européen
des brevets

## EUROPEAN SEARCH REPORT

Application Number

EP 21 21 6898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 593 038 A (BEIJING GREEN VALLEY TECH CO LTD; GUANGZHOU LYUTU ZHIXIN TECH CO LTD) 2 November 2021 (2021-11-02) | 1-4, 10-15 | INV.<br>G06V20/56<br>G06V10/25<br>G06V10/44 |
| A | * pages 2,3 and 7-10 of the attached English machine translation *<br>----- | 5-9 | G06V20/64<br>G06T7/66<br>G06V10/42 |

TECHNICAL FIELDS
SEARCHED      (IPC)

G06V
G06T

The present search report has been drawn up for all claims

| Place of search | Date of completion of the search | Examiner |
|---|---|---|
| The Hague | 6 June 2022 | Atmatzidis, Lazaros |

EPO FORM 1503 03.82 (P04C01)

## ANNEX TO THE EUROPEAN SEARCH REPORT
## ON EUROPEAN PATENT APPLICATION NO.

**EP 21 21 6898**

This annex lists the patent family members relating to the patent documents cited in the above-mentioned European search report.
The members are as contained in the European Patent Office EDP file on
The European Patent Office is in no way liable for these particulars which are merely given for the purpose of information.

**06-06-2022**

| Patent document cited in search report | Publication date | Patent family member(s) | Publication date |
|---|---|---|---|
| CN 113593038 A | 02-11-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3872693 A1

- US 10776953 B2

### Non-patent literature cited in the description

- **GAHRAMANOVA, AMINA.** Locating Centers of Mass with Image Processing. *Undergraduate Journal of Mathematical Modeling: One + Two,* 2019, vol. 10 (1, https://doi.org/10.5038/2326-3652.10.1.4906

- **VLADIMIR AGAFONKIN.** *A new algorithm for finding a visual center of a polygon,* 2016, https://blog.map-box.com/a-new-algorithm-for-finding-a-visual-center-of-a-polygon-7c77e6492fbc